# EUROPEAN PATENT SPECIFICATION

(11) **EP 1 297 496 B1**
(45) Date of publication and mention of the grant of the patent: **23.11.2005**
(21) Application number: 01940254.4
(22) Date of filing: 15.06.2001
(51) Int. Cl.: G07B 15/02

(54) **METHOD AND SYSTEM FOR ORGANIZING THE PAYMENT OF PARKING SERVICES**
SYSTEM UND VERFAHREN ZUM BEZAHLEN VON LEISTUNGEN BEIM PARKEN
PROCEDE ET SYSTEME D'ORGANISATION DE SERVICES DE PARKING PAYANT

(30) Priority: 19.06.2000 EE 200000020 U; 01.02.2001 EE 200100002 U
(43) Date of publication of application: 02.04.2003
(73) Proprietor: EMT AS, 19095 Tallinn (EE)
(72) Inventor: VAHISALU, Raul, EE19095 Tallinn (EE)
(74) Representative: Sarap, Margus
(86) International application number: PCT/EE2001/000004
(87) International publication number: WO 2001/099053

(56) References cited:
- EP-A- 0 698 987
- EP-A- 0 848 360
- WO-A-00/11616
- WO-A-00/19702
- WO-A-96/11453
- WO-A-97/19568
- WO-A-97/45814
- WO-A-98/04080
- WO-A-98/30982
- WO-A-98/34199
- WO-A-99/10844
- WO-A-99/48062
- CA-A- 2 250 673
- DE-A- 10 019 649
- FR-A- 2 832 244
- US-A- 5 263 118
- DATABASE WPI Week 199918, Derwent Publications Ltd., London, GB; Class T05, AN 1999-215240 & ZA 9 705 049 A (STANCOM ELECTRONICS INT PTY LTD) 24 February 1999

## Description

### TECHNICAL FIELD

This invention belongs among the methods and systems for organizing pay parking services, more specifically among those methods and systems that use a mobile communication device to pay for parking services and perform a number of other operations.

### BACKGROUND ART

The majority of towns and cities have some sort of paid-for parking. Different payment systems have been invented. Usually the customer has to estimate the time needed for parking and has to make a prepayment at a payment terminal or obtain a parking token in advance from a newsstand. He/she also needs to put the parking token in a visible place for the parking inspector to be able to verify it. Such systems are characterized by big investments and operating costs, mainly because the payment terminals are expensive and need frequent servicing. Pre-paid parking tokens' distribution costs are high and these tokens can be counterfeited.

The document WO00/11616 discloses a method of managing a parking system comprising terminals communicating using GSM protocol.

Due to the development of mobile communication devices there have been developed parking methods and systems that use mobile communication devices to pay for the parking services in public areas. For instance, in these systems the person attempting to park a vehicle (client) sends data about the parking region, car registration number and personal identification to his/her mobile phone operator. Parking bill is later attached to the regular phone bill.

The method enables the person (parking inspector) checking the right to park at a given location to access the database of the parking service operator using a portable computer whereas an overview of the vehicles that have paid for parking is presented on a graphic display (patent application WO93/20539).

The disadvantage of such a method or system is the fact that one has to supply parking inspectors with the portable computers and ensure data communication between the computer and the mobile network operator's database. The use of computers and mobile data communication devices makes such a system an expensive. Another disadvantage is the condition that this kind of a system has to be administered by either a national or regional mobile network operator and only registered clients of the mobile operator can use this service, which is not desirable in a region with many mobile operators.

As an advancement of the solution described above there has been developed a method and system (patent application WO96/34366) in case of which the identity of the client is established automatically on the basis of the communication device he/she uses. When checking the right to park at a given location the parking inspector sends an appropriate query to the mobile network operator's database using e.g. a mobile phone, and receives an answer on a special control device. According to this system the client must also be the mobile network operator's client (subscriber). This solution can be regarded as being the closest known one considering the level of technology.

The disadvantage of the solution described last is complicated processing of control queries that renders the system unsuitable for practical usage. The system eliminates the use of prepaid GSM cards for parking payment, because their use is basically anonymous and they don't receive any bills from the mobile operator. Also the system eliminates the clients of other mobile network operators to pay for parking services.

### DISCLOSURE OF INVENTION

The invention is disclosed in claims 1-7.

The objective of this invention is to create a flexible and user-friendly method and system of organizing pay parking services by eliminating the shortcomings of the solutions mentioned above, usable by all persons possessing a mobile connection device notwithstanding which operator's client such a person is, and enabling checking of the parking right using a standard mobile communication device.

To achieve the objective of the invention the databases of the mobile network operator(s) and parking service operator have been separated from each other, i.e. the mobile network operator does not have to act as the operator or administrator of parking services. This enables connection of all mobile network operators' databases operating in the area with the database of the parking service operator. A client can use the services of the system if he/she has become a client (subscriber) of one of the mobile network operators who have joined the parking system or if he/she uses a prepaid calling card from such a mobile network operator.

In order to mobile parking payment system for parking services the client calls a special tariff phone number assigned by the mobile network operator. Doing this the client opens a parking account for him/herself and loads a prepayment for parking services to this account, i.e. the prepayment account is created when the first deposit is being made. After that the client will receive a spoken message confirming the amount transferred to the prepayment account. A SMS (Short Messaging Service) message is also sent to the client stating the amount added and the balance of the prepayment account. More funds can be added to the account by calling the number more times. Each such deposit will add the respective fixed amount to the client's next mobile phone bill. To begin parking the client calls to an IVR (Interactive Voice Response) number or sends a SMS message or uses the mobile phone's WAP (Wireless Access Protocol) browser indicating the parking zone code and car's registration number. To end parking the client makes a call to a special phone number. The client's every message receives feedback in the form of an SMS message sent to the client's mobile phone.

The right to park at a given location is checked on the basis of the parking service operator's database, the bill for parking services is delivered together with the bill sent by the mobile network operator to the extent of advance payment made to the prepayment account. The person (parking inspector) checking the right to park at a given location can make queries to the parking service operator's database through the mediation of the mobile network operator by the parking car registration number, using either SMS messages or IVR. The answer to the query is also given either by IVR or with a feedback SMS message to the mobile phone of the parking inspector checking the right to park.

### EXAMPLE

The method involves at least one parking zone designated with a unique code (1) and at least one mobile communication device (2), the mobile network operator's database (3), the parking service operator's database (4), the parking inspector's mobile communication device (5), the computer network connecting the databases (6) that in case of this implementation example is the public computer network (the Internet), and a bank's database (7).

According to the method a person can park if he/she has an open prepayment account (41) in the parking service operator's database (4). To open the prepayment account and to transfer funds to the prepayment account the parker calls a special tariff phone number. The call is registered and transaction is forwarded to the parking service operator's database (4). A prepayment account (41) is then opened for the client in the parking service operator's database, and funds are transferred to this account either from the client's bank account, (mobile operator) prepaid account or by crediting a (mobile operator) contractual client. The client has a right to park for the amount transferred to the prepayment account, and to the client is sent a message informing him/her of the amount added to the prepayment account (for example "*N kroons* have been added to your account").

Thus, to begin parking the client has to know the code of the parking zone (1) and to have enough funds to pay for the service on his/her prepayment account (41). The client can check the balance of the prepayment account by calling special tariff phone number or sending a SMS message to a special short number or using WAP or IVR. The parking zone code can be determined from information displayed at the parking area, from distributed information material or by calling a special short tariff number. In the last case the parking zone is found either by an object located near the parking place (the street, a house number) or automatically (using for example the Global Positioning System (GPS) or Mobile Positioning System (MPS)).

Beginning of parking has to be registered. For this the client sends an SMS message containing the parking zone (1) code or name (for example 123) and the vehicle registration number (for example 345ABC), separated with a character that is not used in vehicle registration numbers (for example "*" or space) to the same special tariff phone number. Thus the SMS message could have e.g. the following form: 345ABC*123. Registration could also be performed via WAP or IVR. The client receives a feedback message (for example "Vehicle number 345ABC, parking began in zone X, account balance x *kroons* if you wish to end sooner call 5678").

When the amount on the prepayment account is exhausted a warning message is sent to the mobile communication device of the client a little (for example 5 minutes) before the end of the paid parking period, enabling the client either to add funds to the prepayment account or leave the pay parking area.

In another embodiment the parking fee is calculated within a certain specified limit to avoid spending the money for parking what is not needed. For example many service users forgot to end parking when they left the parking zone and therefore used all the money they had deposited in the prepayment account. A majority of people remembered forgetting to end the parking when they received the SMS message informing them that the deposited money was about to run out.

So that the client will not loose the full amount deposited in the prepayment account when forgetting to end parking, certain limits have been applied to the parking service. This means that the parking fee is calculated within a certain limit. The limit amount differs by parking zones and it is generally constrained for example within a four-hour parking fee assigned by parking service provider. Before depleting the limit, the parking service user receives an SMS message warning that the parking deposit will soon end. If the client wishes to continue parking, there is an option to increase the limit by going through the parking initiation procedure: either by sending an SMS message or starting the parking via WAP or via IVR. If it is already known that the parking will "extend over four hours", the parking initiation SMS message could be sent two or more times: the parking limit increases accordingly. While initiating the parking via WAP, it is possible to choose the appropriate amount on the WAP screen, via IVR interface you can analogically to SMS initiation or by using DTMF choices.

The client as parking service user has to consider that the limit does not equal the amount deposited in the prepayment account and these two are not related. For example when parking in downtown, the limit is four hours or certain amount of money (48 *kroons*). If there is 12 *kroons* deposited in the prepayment account the client will receive a warning message a half-hour later that the money will soon be depleted. In order to continue the parking, additional money needs to be deposited in the account by calling to the special tariff phone number(s).

To end parking before the amount on the prepayment account is exhausted the client calls a special tariff phone number assigned by the mobile network operator. The client receives a feedback message informing him/her of the end of parking and also the prepayment account balance (for example "Parking of vehicle number 345ABC ended, your account balance is X *kroons*"). The amount left on the prepayment amount can be used for parking later at any time.

A contractual client (subscriber) of a mobile network operator pays for parking according to the mobile phone bill delivered by the mobile network operator.

To check a vehicle's right to park at a given location the parking inspector either sends a message to a special phone number assigned by parking database operator (for example mobile network operator, parking operator etc.) whereby the message must include the parked vehicle registration number (for example 345ABC), or uses for example a special terminal equipped with a touch screen using General Packet Radio Service (GPRS) data transmission technology or Speech Recognition. The mobile network operator communicates the answer either to the parking inspector's mobile communication device using SMS message, WAP or Speech Recognition.

It is obvious to an expert in the field that a system can be built according to this method also in a modified form considering the characteristics of the invention presented in the claim. For example there can be databases of several mobile network operators (for example 31) connected with the database of the parking service operator. In that case the clients of all mobile network operators can pay for parking services using a mobile communication device (for example 21) by making a call to a phone number assigned by the mobile network operator whose client the person in question is (or using WAP or using IVR). The client pays for parking services to the mobile network operator whose subscriber he/she is and the mobile network operator in his turn pays to the parking service operator (3). One could also use different communication devices and systems.

Transmission of data between the database(s) of mobile network operator(s) and the database of the parking service operator can be arranged either over the public computer network (the Internet) using encryption or over a private computer network.

Transferring funds from mobile parking payment system using the bank account to the prepayment account is performed by making a call to a special tariff short number. After calling the short number the client is identified using IVR and the money transfer amount selected by the client is performed. For this user has to make contract with the bank. When making a contract with the bank a client can fix payment amounts and then select the desired payment when making the call to the short number. The bank in its turn performs the defined payment to the bank account of the mobile network operator (3) managing the service and forwards the appropriate information (in real time) to the database of the parking service operator (4) and the client's prepayment account (41).

Loading different amounts of money to the prepayment account can be managed using only one short number. For example, when a client makes a call to the short number a IVR answers "if you wish to add 100 *kroons* to the account press 1, if you wish to add 200 *kroons* press 2," etc. The client can choose the amount he/she is prepared to transfer to the prepayment account as advance payment by pressing the corresponding key on the phone's keypad using Dual-Tone Multi-Frequency (DTMF) technology.

It is already known that user can transfer funds from bank account to the prepayment account making an ordinary funds payment order from banking branch or internet bank or other possible banking delivery channel.

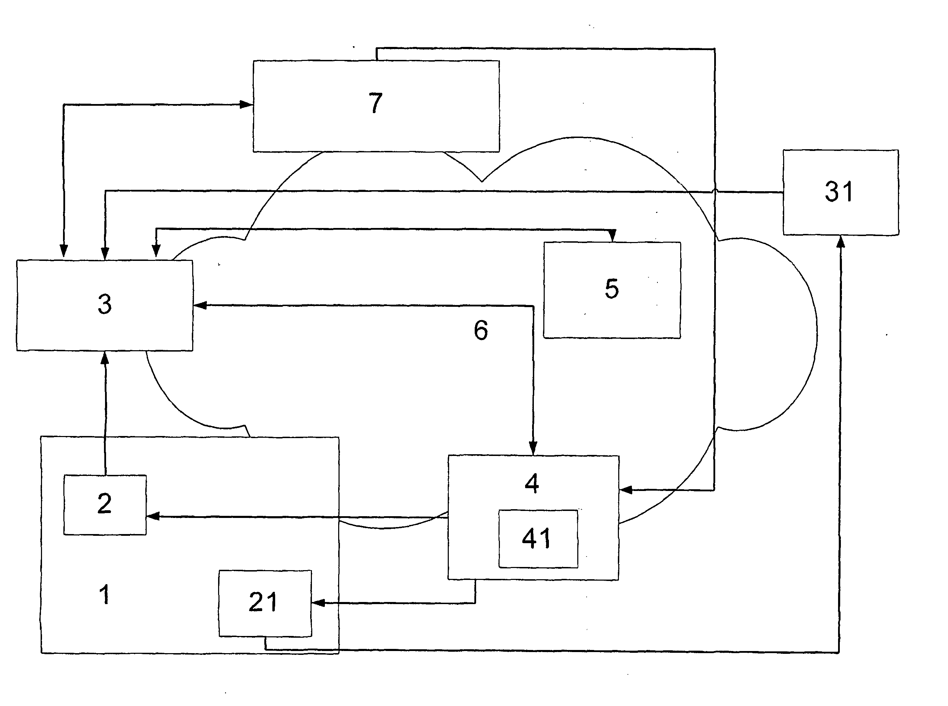

## Claims

1. Method of organizing pay parking involving at least one parking area designated with a unique code (1), at least one mobile communication device (2), at least one mobile network operator's database (3) and at least one parking inspector's mobile communication device (5), the method comprising of steps:
- creating the parking service operator's database (4),
- opening a prepayment account (41) in the parking service operator's database (4) for the client,
- registering a beginning of parking by an SMS message sent to the special service number of the mobile network operator from the mobile communication device (2) or via WAP,
- ending the parking by calling a special number or via WAP,
- calculating the parking fee within a certain specified limit, whereas before depleting the limit, the mobile communication device possessed by the user receives an SMS message warning that the parking deposit will soon end.

2. Method according to the claims 1, is **characterized in that** the funds are transferred to the client prepayment account either from the client's bank account, mobile operator pre-paid account or by crediting a mobile network operator contractual client, whereas the funds are transferred to the prepayment account using a mobile communication device (2), either by calling a mobile network operator or via the public computer network or by some other means.

3. Method according to the claim 1, is **characterized in that** in case of the standing parking the beginning of parking is performed by calling to IVR number.

4. Method according to the claim 1, is **characterized in that** to continue parking and to increase the limit an SMS message will be sent through the parking systems or through starting the parking via WAP.

5. Method according to the claims 1-4, is **characterized in that** the limit amount differs by parking zones and the parking fee limit can be assigned when starting the parking.

6. Method according to the claims 1 to 5, is **characterized in that** the right to park at a given location is checked by sending an SMS message or making a call with the mobile communication device (5) of the parking inspector or also by sending a query via a special terminal using data transmission technology and equipped with a touch screen, or using speech recognition to the parking service operator's database (4), and the information concerning the right to park is received via the mobile network operator by an SMS message, via WAP or IVR.

7. Method according to claims 1 to 6, is **characterized in that** the databases of the mobile network operator (3), the database of the bank (7) and the database of the parking service operator (4) are connected via the computer network (6) for information exchange purposes.

## Patentansprüche

1. Methode für die Organisation des bezahlten Parkens mit wenigstens einem Parkplatz mit einem zugeteilten und einzigartigen Code (1), mit wenigsten einem Mobilfunkgerät (2), mit wenigstens einer Datenbank (3) eines Mobilnetzwerkbetreibers, und mit wenigsten einem Mobilfunkgerät (5) eines Parkkontrolleurs, besteht die Methode aus folgenden Schritten:
- Erstellung der Datenbank des Parkplatzbetreibers (4),
- Einrichtung eines Vorauszahlungskontos (41) für den Kunden in der Datenbank (4) des Parkplatzbetreibers,
- Registrierung des Beginns des Parkens mit einer SMS-Nachricht oder über WAP, die vom Mobilfunkgerät (2) an eine spezielle Service-Nummer des Mobilnetzbetreibers geschickt wird,
- Beendigung des Parkens durch das Wählen einer speziellen Nummer oder über WAP,
- Berechnung der Parkgebühr innerhalb eines festgesetzten Limits, wobei vor dem Erreichen des Limits eine SMS-Nachricht and das Mobilfunkgerät im Besitz des Benutzers geschickt wird, mit der Warnung, dass das Guthaben bald aufgebraucht sein wird.

2. Methode nach Anspruch 1, **dadurch gekennzeichnet, dass** das Geld für das Vorauszahlungskonto entweder vom Bankkonto des Kunden oder vom vorausbezahlten Konto des Mobilbetreibers transferiert wird, oder durch Gutschrift eines Abonnenten eines Mobilnetzwerkbetreibers, wobei das Geld mit Hilfe eines Mobilfunkgerätes (2) auf das Vorauszahlungskonto transferiert wird, entweder durch einen Anruf beim Mobilnetzwerkbetreiber oder über ein öffentliches Computernetzwerk oder auf andere Weise.

3. Methode nach Anspruch 1, **dadurch gekennzeichnet, dass** im Fall des vorgesetzten Parkens der Beginn des Parkens durch die Wahl einer IVR Nummer durchgeführt wird.

4. Methode nach Anspruch 1, **dadurch gekennzeichnet, dass** die Fortsetzung des Parkens und die Erhöhung des Limits durch das Senden einer SMS-Nachricht über Parksystem oder der Beginn des Parkens über WAP durchgeführt wird.

5. Methode nach den Ansprüchen 1 - 4, **dadurch gekennzeichnet, dass** der limitierte Betrag je nach Parkzonen verschieden ist und das Limit der Parkgebühr am Beginn des Parkens entschieden werden kann.

6. Methode nach den Ansprüchen 1 - 5, **dadurch gekennzeichnet, dass** die Parkberechtigung an einem bestimmten Ort durch das Senden einer SMS-Nachricht, oder durch einen Anruf des Parkkontrolleurs mit einem Mobilfunkgerät (5), oder durch das Senden einer Anfrage über ein spezielles Terminal unter Verwendung von Technologie zur Datenübertragung, die mit einer Touch Screen ausgestattet ist, oder unter Verwendung einer Spracherkennung an die Datenbank des Parkplatzbetreibers (4), kontrolliert wird. Die Information betreffend eine Parkberechtigung wird über einen Mobilnetzbetreiber in Form einer SMS-Nachricht empfangen, oder über WAP oder IVR.

7. Methode nach den Ansprüchen 1 - 6, **dadurch gekennzeichnet, dass** die Datenbank des Mobilnetzwerkbetreibers (3), die Datenbank der Bank (7), und die Datenbank Parkplatzbetreibers (4) über ein Computernetzwerk (6) zum Zwecke des Informationsaustausches verbunden sind.

## Revendications

1. Méthode d'organisation de parc de stationnement payant impliquant au moins une aire de parc de stationnement désignée par un code unique (1), au moins une communication mobile (2), au moins une base de donnée d'un opérateur de téléphonie mobile (3), et au moins un dispositif de communication mobile pour l'inspecteur du parc de stationnement (5), la méthode comportant les étapes :
création de la base de données de l'opérateur de service de stationnement (4),
ouverture d'un compte de paiement crédité d'avance (41) dans la base de données e l'opérateur de service de stationnement (4) pour le client,
enregistrement d'un début de stationnement par un message SMS envoyé au numéro de service spécial de l'opérateur de télécommunication mobile depuis le dispositif de télécommunication mobile (2), ou par WAP,
terminer le stationnement par appel d'un numéro spécial ou par WAP,
calculer le prix du stationnement dans une certaine limite spécifiée, tandis qu'avant d'épuiser la limite, le dispositif de télécommunication mobile possédé par l'utilisateur reçoit un message SMS prévenant que le dépôt est proche d'être fini

2. La méthode selon les revendication 1, **caractérisé en ce que** les fonds transférés sur le compte de paiement crédité d'avance du client le sont soit depuis le compte bancaire du client, soit d'un compte prépayé ou par crédit d'un client contractuel d'un opérateur de téléphonie mobile, tandis que les fonds sont transférés sur le compte de paiement en utilisant un dispositif de téléphonie mobile (2), soit en appelant un opérateur de téléphonie mobile, par un réseau d'ordinateurs public ou par d'autres moyens.

3. La méthode selon les revendication 1, **caractérisé en ce que** lors de stationnement continuel, le début de stationnement est réalisé par appel vers un numéro à réponse vocale interactif.

4. La méthode selon les revendication 1, **caractérisé en ce que** pour continuer le stationnement et augmenter la limite, un message SMS sera envoyé par le système de stationnement ou en commençant le stationnement par WAP.

5. La méthode selon les revendication 1-4, **caractérisé en ce que** le montant de la limite diffère par zones de stationnement et que la limite de frais de stationnement peut être assignée lors du commencement de stationnement.

6. La méthode selon les revendications 1 à 5, **caractérisé en ce que** le droit de stationner à un endroit donné est vérifier en envoyant un message SMS ou par appel depuis le dispositif de communication mobile (2) de l'inspecteur de stationnement ou aussi en envoyant une requête par l'intermédiaire d'un terminal spécial utilisant une technologie de transmission de données et équipé avec un écran tactile, ou utilisant la reconnaissance vocale, à la base de données de l'opérateur de service de stationnement (4), et l'information concernant le droit de stationner est reçue par l'opérateur de téléphonie mobile par un message SMS, par WAP ou par système à réponse vocale interactif.

7. La méthode selon les revendications 1 à 6, **caractérisé en ce que** les bases de données de l'opérateur de téléphonie mobile (3), la base de données de la banque (7) et la base de données de l'opérateur de service de stationnement (4) sont connectées par un réseau d'ordinateur dans le but d'échange d'informations.
